# EUROPEAN PATENT APPLICATION

(11) **EP 1 460 530 A2**
(43) Date of publication of application: **22.09.2004**
(21) Application number: 04006267.1
(22) Date of filing: 16.03.2004
(51) Int. Cl.: G06F 3/12

(54) **Network printer connection update scheme for printer clients**

(30) Priority: 18.03.2003 US 391252
(71) Applicant: MICROSOFT CORPORATION, Redmond, Washington 98052 (US)
(72) Inventor: Kiraly, Steven, Redmond Washington 98052 (US); Fenelon, Michael P., Bothell Washington 98011 (US); Roth, Tali, Kirkland Washington 98033 (US)
(74) Representative: Grünecker, Kinkeldey, Stockmair & Schwanhäusser Anwaltssozietät

(57) **Abstract**

A printer connection administration/maintenance framework is disclosed. The framework is incorporated into a networked client machine. The framework maintains printer connections, in a network comprising printers, a directory comprising an enumeration of network entities and configuration definitions assignable to the network entities, and wherein the configuration definitions potentially include printer connections. The printer connection administration framework includes a printer connection extension. The printer connection extension is a program module that, when invoked, processes printer connection updates in a configuration definition assigned to a network entity with which the client machine is associated. The printer connection extension also submits an update request to a printer sub-system on the client machine informing the printer sub-system on the client machine of changes to printer connections arising from the printer connection update.

## Description

### FIELD OF THE INVENTION

The present invention relates generally to networked computing systems. More particularly, the present invention relates to methods and computer system mechanisms for administering/configuring print server clients in a network printing environment.

### BACKGROUND OF THE INVENTION

One popular and economical way for utilizing printers within an enterprise including multiple distinct users/computers linked together on a network is to share the networked printers among the multiple distinct users/computers. In such cases, the users submit their print requests for a particular printer to a specific print queue maintained by a print server that is also connected to the network. The specific print queue is identified to the print clients in the form of a printer connection. The printer connection specifies an operational path between a client and an intended networked printer at which the print request is ultimately output The print request is formatted and sent to the print queue according to a network printer driver.

. One challenge facing network administrators is to enable networked clients to print to new printers once the printers become available on the network. Another challenge faced by network administrators is to maintain the printer connections up-to-date for each of the network printer clients This entails adding new connections when a new printer is available and deleting connections when a printer is no longer available. Administrators have encountered high overhead costs when adding new printers to a network or new servers that receive and carry out print requests for the network printers.

Administrators carry out the task of maintaining such printer connections by manually changing the network connections at each computer in a network when a set of printer connections for a particular computer changes. In general, such changes are implemented by an administrator, or administrator assistants, physically going to each of the print client computers and entering changes to a printer directory In the case of charge networks, updating the printer connections can be very time consuming. furthermore, until the network printer connections are updated, the printer corresponding to the printer connection cannot be used by the non-updated users. This can lead to long periods of time before a new printer connection can be utilized by logged on users via networked computers.

Administrators potentially avoid the aforementioned update delays by sending email instructions to users. If the users are capable of finding and changing the proper entries in their computers, then the administrators can save some time and effort. However, there exists the possibility, if not probability, that some users will not understand the instructions, ignore the email, or will not implement the instructions correctly. In such case, the administrator resorts to personally instructing the particular users or resorts to the aforementioned personal manual updating the appropriate network printer connections on the offending clients.

An alternative to the aforementioned manual methods is to specify printer connections in logon scripts. When printer clients (users/machines) logon the network, complex logon scripts specifying a set of printer connections for an individual user or group of users assign printer connections to the clients. In such case, complex logon scripts, that execute when a user logs onto a network, are specified for each of the affected clients. In response to changes to the printer connections (or print servers) the client logon scripts must all be modified. This method, while achieving a certain degree of automation, does not ensure that currently logged on users will receive the new printer connections. Furthermore, the programming of logon scripts is not a trivial task. In the case where logon scripts are used to designate printer connections, the administrator hard codes the printer UNC/Share name into the logon script, and the parsing needed to add/delete connections is name-based. When a server or printer name changes, the logon scripts are edited to conform to the new name(s). The changed connections are then implemented, at some undetermined time in the future, when an affected user logs onto a network.

### SUMMARY OF THE INVENTION

The printer connection update/maintenance architecture disclosed herein addresses the absence of a truly administrator-friendly, reliable printer connection update maintenance facility for ensuring that users and/or machines have up-to-date printer connections in a network environment comprising networked printers and print servers.

In embodiments of the present invention, a printer connection management framework is incorporated, in the form of computer instructions and data structures, into a client computer system. The printer connection management framework on a client computer system updates printer connections according to configuration definitions applicable to logged on users or the computer entity upon which the framework executes.

More particularly, the present invention is directed to a method for updating printer connections by a client machine, in a network comprising printers, a directory including an enumeration of network entities and configuration definitions including configurable parameters assignable to the network entities. In such environment wherein one of the configurable parameters of the configuration definitions comprises connections to specified ones of the printers in the network, the method comprises a step of the client machine requesting an update of information maintained in a configuration definition assigned to a first network entity in the directory with which the client machine is associated. The client machine receives a notification of a change to a set of printer connections in the configuration definition assigned to the first network entity. Thereafter, the change to the set of printer connections is incorporated into the printer sub-system of the client machine.

Similarly, in accordance with another aspect of the present invention, a printer connection administration framework is incorporated into a networked client machine. The framework maintains printer connections, in a network comprising printers, a directory comprising an enumeration of network entities and configuration definitions assignable to the network entities, and wherein the configuration definitions potentially include printer connections. The printer connection administration framework comprises a printer connection extension. The printer connection extension is a program module including instructions for processing a printer connection update can corresponding to at least a first configuration definition in the directory service server and assigned to a first network entity with which the client machine is associated. The printer connection also includes computer executable instructions for submitting an update request to a printer sub-system on the client machine informing the printer sub-system on the client machine of changes to printer connections in accordance with the printer connection update.

In accordance with other aspects of the invention, the aforementioned framework is integrated in a computer network including a directory server machine. The directory server machine maintains a current set of configuration definitions and links to network entities to which particular ones of the configuration definitions apply.

### BRIEF DESCRIPTION OF THE DRAWINGS

While the appended claims set forth the features of the present invention with particularity, the invention and its advantages are best understood from the following detailed description taken in conjunction with the accompanying drawings, of which:
Fig. 1 is a block diagram depicting an exemplary computer system for carrying out an embodiment of the invention;
Fig. 2 is a high level schematic diagram depicting a representative network environment within which the present invention is advantageously incorporated;
Fig. 3 is a schematic diagram illustratively depicting the server and client components of an exemplary embodiment of the present invention;
Fig. 4 summarizes a set of components of an exemplary printer connection descriptor;
Fig. 5 summarizes a set of components of an exemplary schema for specifying printer connections in a configuration definition;
Fig 6 is a flowchart summarizing a set of steps for changing a printer connection in clients pursuant to a centralized configuration source;
Fig. 7 is an exemplary printer management console interface facilitating selection of a printer for which a printer connection is designated;
Fig. 8 is an exemplary dialog box interface facilitating designating printer connections to specific configuration definitions;
Fig. 9 is an exemplary browse interface launched from the dialog depicted in Fig. 8;
Fig. 10 is an exemplary management console interface enumerating pushed printer connections and their associated group policy objects;
Fig. 11 is an exemplary group policy editing interface enhanced to display printer connections that are pushed to a particular GPO; and
Fig 12 is an exemplary dialog that is launched when an administrator selects Add/Remove Printer on a higher level interface.

### DETAILED DESCRIPTION OF THE DRAWINGS

The present invention is embodied, by way of example, within a networked computer system environment including printer clients, printer servers, printers and a directory/repository of network resources and client group configuration information. The directory of network resources/configurations maintains a network directory providing a structured enumeration of network entities (users, machines, and groups thereof). The directory of network resources/configurations also includes information pertaining to resources/configurations associated with the enumerated network entities. In a particular embodiment, the network entities are represented/arranged in a set of directory containers (e.g., sites, domains, and organization units). Separately maintained configuration definitions are associated with one or more of the directory containers. Such associations are specified through a network administration utility.

In the aforementioned network environment including the directory of network resources, an administrator specifies changes to printer connections applicable to users and/or machines in the network through changes to the configuration definitions maintained by the directory of network resources. Such printer connection changes include adding and removing a printer connections. The printer connections are applicable to users, machines, and/or groups of either users or machines.

After the changes to printer connections are entered into the configuration definitions of the directory of network resources, the changes are propagated, during an event-driven configuration information refresh operation, to the clients (users and/or machines) falling within the scope of directory containers associated with the changed configuration definitions. In an embodiment of the invention complimentary processes on the client machines, tailored to retrieve and update printer connections, periodically request/obtain updated printer connections based upon the changes entered into corresponding configuration definitions in the directory of network resources. Furthermore, to avoid waiting for the refresh cycle to be performed to obtain a list of printer connections applicable to a particular user, the printer connections are also requested from the directory of network resources/configurations when a user logs onto a client machine. The clients incorporate the printer connection updates into their printer sub-systems. The printer sub-systems apply the printer connection changes to the machine and appropriate logged on users.

In a particular embodiment of the invention, the client printer connection update feature operates in concert with an automated printer driver update mechanism. The automated driver update mechanism determines whether a driver exists on the client machine corresponding to a particular printer associated with a new printer connection. A new driver is located and loaded to the client machine in the case where the client machine does not have the proper driver for the identified printer.

The printer connection entries stored within the configuration definitions maintained by the directory of network resources/configurations service structure include, in an exemplary embodiment, a number of fields. The exemplary printer connection entries include a name assigned to the connection, a name of the printer, a name of a print server, and attributes describing the type of connection (e.g., a machine connection, a user connection, a shared print connection (multiple print servers), etc.). When the printer connections are stored on a printer client, the configuration definition source is also identified to facilitate subsequent updates to the printer connections based upon changes to corresponding configuration definitions maintained by the directory of network resources/configurations (e.g., deletions of previously specified printer connections in a configuration definition). The names and functions of the printer connection fields differ in alternative embodiments of the invention.

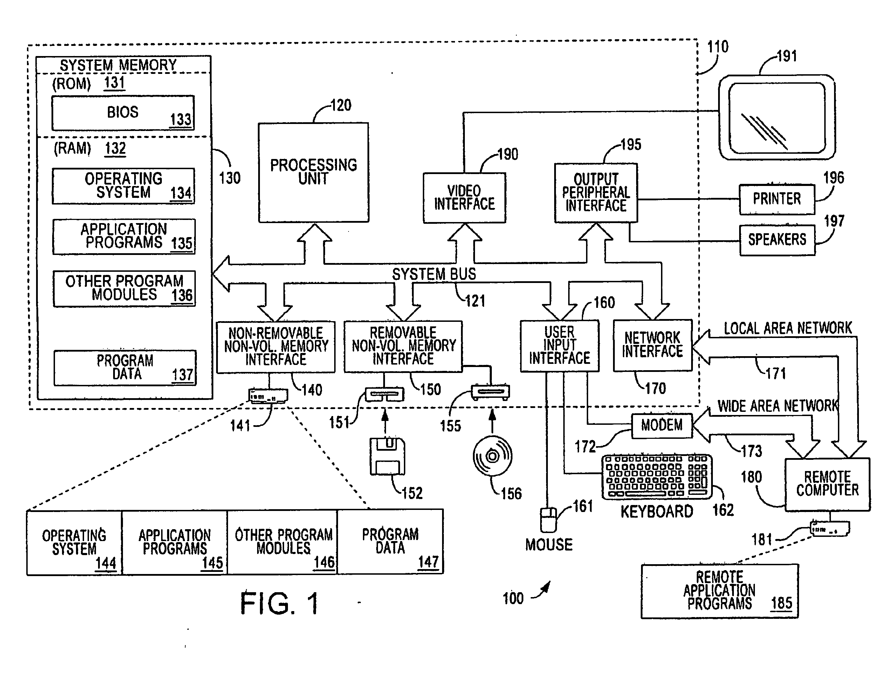

**FIG. 1** illustratively depicts an example of a suitable operating environment 100 for carrying out printer client-side functionality of the network printer connection update scheme in accordance with the present invention. The operating environment 100 is only one example of a suitable operating environment and is not intended to suggest any limitation as to the scope of use or functionality of the invention. Other well known computing systems, environments, and/or configurations that may be suitable for use with the invention include, but are not limited to, personal computers, server computers, laptop/portable computing devices, hand-held computing devices, multiprocessor systems, microprocessor-based systems, network PCs, minicomputers, mainframe computers, distributed computing environments that include any of the above systems or devices, and the like.

The invention is described in the general context of a set of steps and processes carried out by computer-executable instructions, such as program modules, being executed by a computer. Generally, program modules include routines, programs, objects, components, data structures, etc. that perform particular tasks or implement particular abstract data types. Though the exemplary embodiment is described with reference to locally executed processes on a single computer system, the invention is potentially incorporated within network nodes operating in distributed computing environments where tasks are performed by remote processing devices that are linked through a communications network. In a distributed computing environment, program modules are generally located in both local and remote computer storage media including memory storage devices.

With continued reference to **FIG. 1**, an exemplary system for implementing the invention includes a general purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 1 10, such as during start-up, is sometimes stored in ROM 131. RAM 132 typically Contains data and/or program modules that are immediately accessible to and/or presently being operated on by processing unit 120. By way of example, and not limitation, **FIG. 1** illustrates operating system 134, application programs 135, other program modules 136, and program data 137.

The computer 110 may also include other removable/non-removable, volatile/nonvolatile computer storage media. By way of example only, **FIG. 1** illustrates a hard disk drive 140 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through an non-removable memory interface such as interface 140, and magnetic disk drive 151 and optical disk drive 155 are typically connected to the system bus 121 by a removable memory interface, such as interface 150.

The drives and their associated computer storage media discussed above and illustrated in **FIG. 1**, provide storage of computer readable instructions, data structures, program modules and other data for the computer 110. In **FIG. 1**, for example, hard disk drive 141 is illustrated as storing operating system 144, application programs 145, other program modules 146, and program data 147 Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies. A user may enter commands and information into the computer 20 through input devices such as a keyboard 162 and pointing device 161, commonly referred to as a mouse, trackball or touch pad. Other input devices (not shown) may include a microphone, joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device may also be connected to the system bus 121 via an interface, such as a video interface 190. In addition to the monitor, computers may also include other peripheral output devices such as speakers 197 and printer 196, which may be connected through a output peripheral interface 190.

The computer 110 potentially operates in a networked environment using logical connections to one or more remote computers, such as a remote computer 180. The remote computer 180 may be a personal computer, a server, a router, a network PC, a peer device or other common network node, and typically includes many or all of the elements described above relative to the computer 110, although only a memory storage device 181 has been illustrated in **FIG. 1.** The logical connections depicted in **FIG. 1** include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, **FIG. 1** illustrates remote application programs 185 as residing on memory device 181. It will be appreciated that the network connections shown are exemplary and other means of establishing a communications link between the computers may be used.

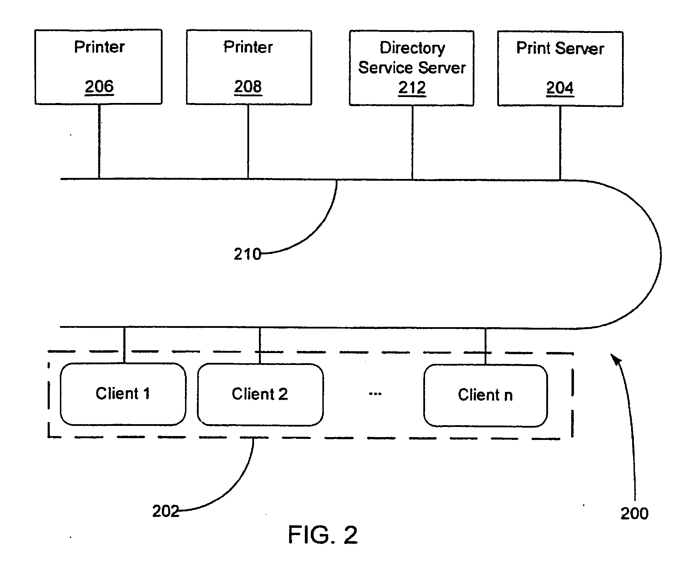

**FIG. 2** illustratively depicts an exemplary network including a set of network system entities that participate in network printer client configuration and print operations in accordance with an exemplary embodiment of the present invention. The exemplary computer network environment 200 includes a set of client machines 202(1-n) that execute application programs on behalf of logged on users. The number of client computers (n) is generally anywhere from a few computers to hundreds or even thousands. Such network conceivably includes wide area network links that open up the network to virtually any number of additional client machines. The client machines 202 submit print requests to a print server 204 to output printed documents on a printer connected to the network such as printer 206 or printer 208 via a network link 210. The print server 204, in turn, renders print jobs to the printer 206 or printer 208 on behalf of the client machines 202. The printers 206 and 208 thereafter receive the rendered print jobs from the print server 204, and the printers 206 and 208 generate printed document output.

A client computer of the client machines 202, in an embodiment of the invention, issues print requests after first establishing a printer connection at the print server 204. In general, a printer connection establishes an identification for directing subsequent print requests to a networked printer (e.g., printer 206) via a print server (e.g., print server 204). In a particular embodiment of the invention, the printer connection specifies a name for a combination of a printer and a print server (or group of print servers) that renders print requests to the printer on behalf of requesting clients. Furthermore, in the illustrative embodiment, the printer connection corresponds to a print queue maintained within the print server 204 to handle requests from the client machines 202 to a particular one of the printers 206 and 208.

The client machines 202 also require a print driver corresponding to the particular printer type to which the client machines 202 submit print requests. Such print drivers convert high level printer-independent print requests by applications on the client machines 202 into printer-specific print requests that are then forwarded via the link 210 to the print server 204. The print server 204 then places the print request onto a print queue corresponding to a printer connection identified in the print request. The print drivers are either manually installed on the client machines 202 or, alternatively, are downloaded in a known manner from a source of printer drivers on the network 204 according to an automated printer driver installation method.

Embodiments of the present invention include network resource directory and configuration definition facilities that enable an administrator to designate/update printer connections for groups of users and machines in a network. By way of example, a directory service server computer 212 maintains a structured enumeration of network entities (users, machines, and groups thereof). The directory service server computer 212 also includes configuration definitions. The configuration definitions store a variety of information that is utilized by applicable client machines 202 to set of their operational state. The operational state of the client machines 202 includes an enumeration of available printer connections. In a particular embodiment, the network entities are represented/arranged in a set of directory containers (e.g., sites, domains, and organization units) maintained by the directory service server computer 212. Associations between the separately maintained configuration definitions and one or more of the directory containers enable a network administrator to assign printer connections (defined within the configuration definitions) to machines and users represented in the set of directory containers. Such configuration definitions (including the printer connections), and associations between directory containers and configuration definitions, are specified through a network administration utility. The printer connection assignments are propagated to individual machines and users through configuration update mechanisms described, by way of example, herein below.

Maintaining the printer connections within the directory service server computer 212 provides a network administrator an efficient and reliable mechanism for updating the printers available to the client machines 202 and logged on users within the computer network environment 200. Rather than making specific changes to logon scripts of particular users, sending emails to users, or sending assistants to each client machine 202 to update the listing of printer connections (to incorporate a change to the networked computers), an administrator specifies printer connection changes through the configuration definitions (e.g., group policy objects in the WINDOWS 2000 operating system environment) maintained on the directory service computer 212. Thereafter, the changes to the printer connections are propagated to client computers and/or users in the network through event-driven configuration refresh operations (e.g., every 90 minutes) that propagate configuration changes to constituents of the computer network environment 200. Alternatively, and in addition to the periodic group policy object change propagation mechanism, the printer connections are updated in response to an individual user logon event. Thus, the printer connections specified in associated configuration definitions are applied to a particular user when a user logs onto the network 200 after the printer connection changes have been specified in the directory service server computer 212.

The present invention contemplates using a variety of network resource configuration repository structures for carrying out the printer connection change repository function supported by the above-described directory service server computer 212. The exemplary embodiment utilizes configuration definitions associated with directory containers to designate/maintain printer connections and changes to printer connections from a network administrator management console. However, alternative directory and configuration repository structures are contemplated in alternative embodiments of the invention that facilitate receiving and maintaining changes to printer connections specified by a network administrator through a network resource management console interface. Furthermore, rather than having a single repository, alternative embodiments of the invention include multiple instances/types of repositories within which printer connection changes are maintained for subsequent distribution to appropriate network entities (e.g., logged on users, machines, etc.).

The above-described network environment 200 is exemplary. As those skilled in the art will readily appreciate, the present invention, enabling an administrator to specify/store changes to printer connections in a directory service or similar network resource configuration specification repository, can be incorporated into a variety of networks. Thus, the present invention is not limited to any particular network topology or environment.

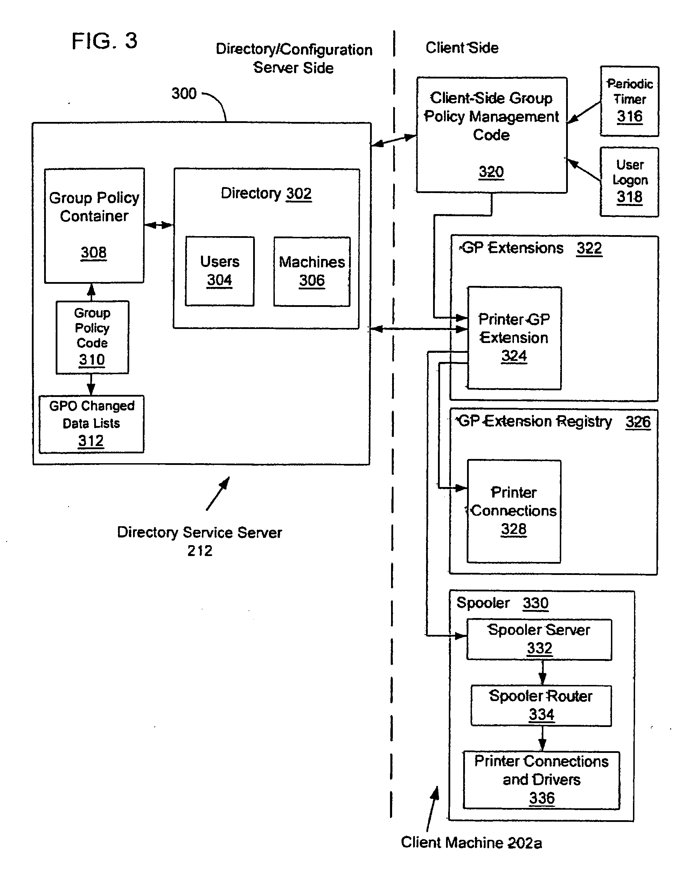

In accordance with an embodiment of the present invention, components of the directory service server 212 and client machines 202 cooperatively interact to distribute/apply printer connection actions (e.g., remove, add, etc.) to logged on users and networked machines. Turning to FIG. 3, an exemplary embodiment of the present invention is described with reference to components of the directory service server computer 212 and an exemplary one of the client machines 202.

### Directory (tree) of Network Resources

As mentioned previously above, a directory of network resources/configurations 300 on the directory service server computer 212 stores/maintains a directory 302 comprising a structured enumeration of network entities represented in the form of directory containers (e.g., sites, domains, and organization units). In an embodiment of the invention the directory 302 includes a plurality of group resource configuration units arranged, by way of example, into one or more hierarchical tree structures representing groups and sub-groups within an organization. In the exemplary embodiment, the directory 302 includes a first sub-tree 304 representing user groups and a second sub-tree 306 representing machines.

### GPOs (storing printer connections)

The directory of network resources/configurations 300 also comprises aforementioned configuration definitions maintained in a container of group policies 308. The configuration definitions define setup states (policies) applied to groups of the client machines 202 and logged on users in the network 200. In an embodiment of the present invention, the configuration definitions in the container of group policies 308 include printer connections (as well as other specified configuration parameters). Such printer connections are specified by network administrators. The specified printer connections are then stored, as individual instances of configuration definitions, in the container of group policies 308. The individual configuration definitions are then associated with one or more particular groups of users and/or machines represented in the directory 302. The configuration definitions are thereafter distributed to the appropriate users and/or client machines 202.

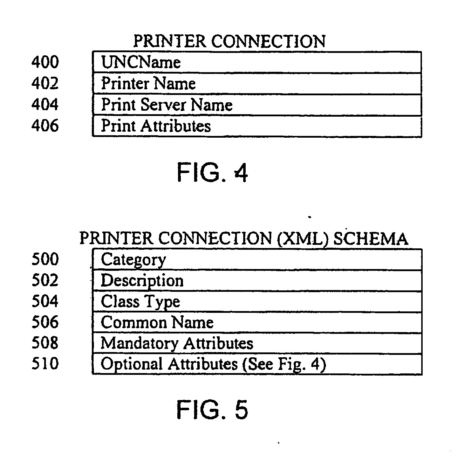

Group policy objects, supported in WINDOWS 2000 and later generations of the WINDOWS operation system, are utilized by network administrators to designate/specify options for managed client computer configurations for particular groups of users and/or physical computing machines. In a particular embodiment of the present invention, group policy objects (GPOs) are stored within the container of group policies 308, and the GPOs are capable of specifying the aforementioned printer connections. Thus, an administrator creates a GPO (e.g., GPO1) using a MICROSOFT MANAGEMENT CONSOLE group policy snap-in interface, and stores GPO1 in the container of group policies 308. GPO1 includes printer connections PC1, PC2, and PC3. An exemplary format for the printer connections is illustratively depicted in FIG. 4 described herein below. Thereafter the administrator associates GPO1 with particular objects-(defining groups of users or machines) in the directory 302. Similarly, the MICROSOFT MANAGEMENT CONSOLE enables an administrator to edit and re-save a GPO that was previously saved in the container of group policies 308. It is further noted that the printer connections (e.g., PC1, PC2, and PC3) are associated with a configuration data type identifier (" printer connection" ) that aids identification of the information when distributed to, and processed by, users/machines. Such identification is achievable by tagging each printer connection or alternatively by grouping multiple printer connections together and tagging the group. Other identification methods will be known to those skilled in the art Furthermore, the repository components of the directory service server computer 212 are potentially present in multiple networked entities that include designated repositories of specified printer connections and/or printer connection actions (e.g., remove, add, etc.).

The directory of network resources/configurations 300, in an exemplary embodiment, includes a group policy object change notification optimization feature that limits invoking client-side group policy extensions. In particular, server-side group policy code 310 executing upon the directory service server 212 records an identification corresponding to a particular type of configuration description data (e.g., printer connections) when a particular group policy object (e.g., GPO1) is changed. The identification is associated with a particular client-side group policy extension (e.g., printer extension) that is invoked on the client machine 202a. In an embodiment of the invention, the changed data type identifications are organized according to group policy object. Thus, for each group policy object in the group policy container 308 that contains unprocessed changes, a corresponding list of changed data types is maintained in a set of lists 312. In a particular embodiment of the invention, the set of lists 312 hold globally unique identifiers corresponding to particular client-side extensions. Thus, a client side extension need not be invoked unless client-side group policy management Code first determines that the client side extension is identified by an entry in the set of lists 312.

### Client-side Components

Event-driven processes on the client machines 202 request print connection updates, pertaining to the particular ones of the client machines 202 and users logged thereon, from the directory of network resources/configurations 300. The client machines 202 also include processes for carrying out changes to printer connections based upon responsive updated printer connection information extracted from particular configuration definitions (associated with the particular client machines) in the container of group policies 308.

Notification and distribution of the printer connection updates by the directory of ) network resources/configurations 300 to client machines 202 in the network 200 occurs in any one of a variety of ways. In an embodiment of the present invention, the client machines 202, prompted by a periodic timer 316 (having, by way of example, an administrator-configurable period), periodically query the directory of network resources/configurations 300 for changes, and extract printer connection data specified in GPOs associated with the entities represented in the directory 302. Alternatively, or in addition to the pulling mechanism, the printer connection changes are pushed by the directory of network resources/configurations 300 to the client machines 202. Yet another printer connection update triggering mechanism/method, incorporated into a user logon process 318, ensures that users have up-to-date printer connections when they initially log onto a network.

With continued particular reference to FIG. 3, a client machine 202a executes processes for retrieving changed data from the group policy objects maintained by the directory of network resources/configurations 300. The client machine 202a includes client-side group policy management code 320. The event-driven client-side group policy management code 320, in an embodiment of the present invention, executes periodically (e g., based upon an administrator-set duration such as every 90 minutes) and during user logon. The group policy management code 320, once invoked, queries the directory of network resources/configurations 300 for changes to all group policy objects associated with the client machine 202a or logged on user. Such query, in an embodiment of the invention, is directed to particular ones of the set of lists 312 corresponding to the group policy objects associated with the client machine 202a or a user logged onto the machine 202a. In an embodiment of the invention, the set of lists 312 includes a list having a GUID corresponding to printer connection data, for a group policy object associated with a user logged onto the client machine 202a or the client machine 202a itself.

The client machine 202a also includes client-side group policy extensions 322. The group policy management code 320 invokes such extensions on the client machine 202a on an as needed basis to process corresponding configuration definition data types (e.g., printer connections) specified by group policy objects (e.g., GPO1 ) in the group policy container 308. In accordance with an embodiment of the present invention, the group policy extensions 322 include a printer group policy extension 324 that is customized to retrieve and process changes to the printer connections maintained by the group policy container 308 In an embodiment of the invention, the printer group policy extension 324 of the client machine 202a processes updates to printer connections specified for group policy objects in the group policy container 308.

The printer connections are maintained by the client machine 202a in a manner such that when a previously stored printer connection is removed/modified in the group policy container 308, then the old set of connections maintained in a group policy extension registry structure 326 is readily updated by deleting/modifying the corresponding printer connection in a printer connections section/branch 328. By way of example, after extracting a current set of printer connections from one or more-GPOs (e.g., GPO1 in the group policy container 308, the printer group policy extension 324 appends a GPO identification, uniquely identifying the source GPO of the printer connection, to each retrieved printer connection. The GPO identification facilitates subsequent deletion of printer connections in response to an updated GPO containing a differing set of printer connections. The new set(s) of printer connections are placed within the printer connections section/branch 328 of the group policy extension registry structure 326. Alternatively, a sub-section/branch is created within the printer connections section/branch 328 for each GPO. In such case, the individual stored connections need not be separately tagged with a unique identification corresponding to the GPO from which they were extracted. The printer connections section/branch 328 of the extension registry structure 326, in maintaining an association between a printer connection and its source GPO, supports storing duplicate printer connections associated with differing GPOs.

As those skilled in the art will readily appreciate, there are many different ways in which to maintain a current set of printer connections applicable to a particular machine and/or logged on user. The present invention is not limited to any particular update mechanism or printer connection storage facility. Rather, the present invention is potentially carried out by a number of different methods and structures that maintain a current set of printer connections that are applicable to a client machine/user.

Another aspect to printer connection updates is the re-configuration of printer sub-system components based upon the updated printer connections. In an embodiment of the invention, the printer group policy extension 324 calls an update method on a print spooler 330 of the client machine 202a to notify the print spooler 330 of print connection updates. In an embodiment of the invention, the call to the print spooler 330 includes an array of printer connections representing a composite of all printer connections that are present in the printer connections section 328 of the extension registry structure 326. In contrast to the extension registry structure 326, the print spooler 330 does not maintain duplicate printer connections (i.e., the source GPO of the connection is irrelevant to the spooler). In an embodiment of the invention, a spooler server 332 queues the printer connection update call from the printer group policy extension 324 for later processing by a spooler router 334. The spooler router 334 applies the array of printer connections, passed in the call to the print spooler, to its print request routing operations. The spooler router 334 determines entries to delete/add based upon a comparison between the printer connections listed in the passed array and printer connections previously installed in the print sub-system printer connections 336 of the client machine 202a. In processing the contents of the passed printer connection array, the spooler router 334 initially processes the deleted printer connections, then adds the new printer connections. In an embodiment of the invention, deleted printer connections are identified by their absence in the passed array from the printer extension.

There are many ways in which the spooler, in an embodiment of the invention, the spooler 330 determines whether a corresponding driver exists for each printer connection. If a driver for a particular printer type is not yet installed on the client machine 202a, then the spooler 330 requests downloading and installing the printer driver. However, the present invention does not require any particular printer driver download mechanisms/methods. Many ways of obtaining and installing printer drivers on the client machine 202a are known to those skilled in the art. For example, rather than installing a new printer driver without a user's knowledge, a dialog box on the client machine 202a prompts a user to download the driver for a networked printer.

In an illustrative embodiment of the invention, the printer group policy extension 324 uses the policy refresh interval to retry failed attempts to pass printer connections to the spooler 330. Retry logic is built into the client-side group policy code 320 to accommodate instances where printer connections are successfully retrieved from the group policy container 308, but the new printer connections are not successfully installed by the spooler 330 on the client machine 202a.

For purposes of optimizing performance, with regard to some of the client side group policy extensions 322, the group policy management code 320 does not invoke the extension unless corresponding data in a GPO has changed. However, in one retry logic scheme involving the printer connections, the printer group policy extension 324 is invoked after each awakening event of the group policy management code 320 ― without regard to whether there are changes to printer connections in associated group policy objects in the group policy container 308. In the case where no changes have occurred to the printer connections in GPO's corresponding to the printer group policy extension 324, the printer group policy extension 324 will not query the directory of network resources/configurations 300 (a task requiring time and resource consuming communications over the network between the client machine 202a and the directory service server computer 212) Instead, the printer group policy extension 324 calls the update method on the print spooler 330 and passes the array of printer connections representing a composite of all printer connections that are present in the printer connections section 328 of the extension registry structure 326.

In view of the above-described refresh operation performed by the printer group policy extension even when no changes have occurred to the printer connections, the spooler 330 takes steps to by-pass updating its configuration when no changes have occurred. In particular, the spooler 330 utilizes CRC's, generated on the array of printer connections passed by the printer group policy extension 324, to track changes to the printer connection list. The spooler 330, on each successful update of the printer connections, generates a CRC on its list of printer connections. When the spooler 330 receives the array of printer connections, the spooler 330 compares the current pushed printer connection CRC with the last successful CRC if they are equal it will do nothing. If the CRC's do not match, the spooler queues the new printer connection list for background processing on the client machine 202a. If the spooler 330 fails to carry out an update to the set of printer connections, the spooler 330 invalidates the CRC. The spooler then waits for the call from the printer group policy extension 324 to retry a previous unsuccessful printer connection update operation.

It is noted in closing with regard to the structures depicted in FIG. 3 that even though described with reference to a single networked client computer 202a in FIG. 3, the client computer components, in an embodiment of the present invention, are present within each of the client machines 202 that participate in the automated printer connection mechanism described herein. Furthermore, multiple instances of printer connections sources (like the directory of network resources/configurations 300) operate as sources of printer connections.

Turning to FIG. 4, an exemplary data structure depicts fields of a printer connection maintained, in an illustrative embodiment of the invention, within group policy objects stored in the group policy container. A Universal Naming Convention Name field 400 stores a full printer connection name using the well known UNC convention (i.e., \\servername\sharename). By way of example, a printer connection is specified by a printer and print server, and the UNCName field 400 comprises a composite of the printer name and print server name. In the case of a printer (share) name "bar" and a print server name "foo" , the UNCName field 400 stores "\\foo\bar." A printerName field 402 stores the printer (share) name portion (e.g., bar) of the printer connection. A serverName field 404 stores the server name portion (e.g., foo) of the printer connection

A printAttributes field 406 designates attributes for a printer connection. In an embodiment of the invention, three types of printer connection attributes are designated. One or more of such attributes can be designated for each printer connection by, for example, setting an appropriate bit in the printAttributes field 406. In an embodiment of the invention, three bits are used to specify three distinct attributes assignable to a printer connection. A first connection attribute identifies a connection as assignable to a client machine. A second connection attribute identifies a connection as being assignable to a user and then provided to such user's client machine after the user successfully logs onto the network. Yet another connection attribute identifies the printer connection as a distributed print server (DPS) connection. DPS connections specify a single printer, but allow any one of multiple print servers to handle the print request from a client machine specifying the printer connection.

Turning briefly to FIG. 5, in an embodiment of the present invention, the printer connections are specified by tagged fields according to a printer connection XML schema. In such case the tagged fields of a printer connection include a category 500 (e.g., "printer connection policy" ) that facilitates identifying the configuration (group policy) information as a printer connection. A description 502 identifies a descriptive text string for identifying the policy structure type (e.g., "printer policy" ). A class type 504 identifies the class of the policy definition (e g., "structural" ). A common name 506 is a place holder for the common name identifying printer connections (eg., "printer connection policy" ). A mandatory attributes 508 specifies any required attributes for the printer connection definition. An optional attributes section 510, in an embodiment of the present invention, identifies the fields depicted in FIG. 4 that define a printer connection.

The client-side printer group policy extension 324, when storing a received printer connection in the printer connections section 328 of the extension registry structure 326, augments the above-described printer connection fields set forth in FIG. 4 with a configuration definition source (GPO) identification. In an embodiment of the invention, a Unicode string identifies a source GPO in each printer connection entry of the printer connections 328. Having described exemplary client and server-side printer-connection structures, it is noted that such structures are altered in accordance with various alternative embodiments of the invention.

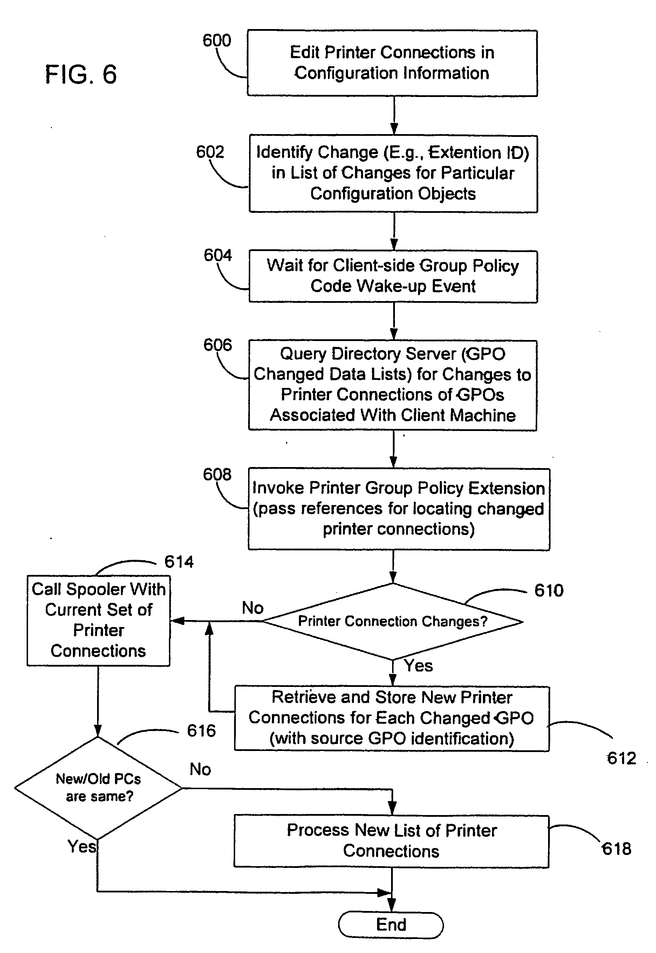

Having described an exemplary set of directory and client components facilitating carrying out the present invention, attention is directed to FIG. 6 that summarizes steps performed by the exemplary components to distribute printer connections from a directory of network resources/configurations 300 to a number of networked client machines and logged on users. The steps summarized herein below represent the combined operations of multiple components of a computer network (described by way of example herein above) with regard to a set of printer connections associated with one or more group policy objects maintained by the directory service server machine 212 and associated with one or more of the client machines 202.

Initially, during step 600 an administrator, through a configuration interface, adds or removes printer connections to/from a GPO in the group policy container 308 of the directory of network resources/configurations 300. Such changes achieved during step 600 include an initial designation of printer connections for network entities that currently have none. As a consequence of the administrator's actions, during step 602 the group policy code 31 0 records, in particular ones of the changed data lists 312, that a change for a specific group policy client side extension (or type of configuration data) was made for the particular GPO. In an embodiment of the invention, the group policy code 310 records an extension-specific GUID to which the changed configuration data applies as well as the GPO containing the changed data. Step 602 is an optimization feature, of a particular embodiment of the invention, that prevents invoking client side extensions to obtain updated configuration data of a particular type from the group policy container 308 when no data for the particular extension was changed. On the other hand, the group policy extensions on the client machine 202a are potentially invoked to perform other functions that do not rely upon whether new configuration data is present in the group policy container 308.

The directory of network resources/configurations 300, in an embodiment of the present invention, does not initiate updating printer connections in client computers in response to update actions by an administrator. Instead, the directory of network resources/configurations 300 waits for queries regarding the group policy container 308 and changes relating thereto. It is noted that during such wait period, further changes are potentially added to the configuration information maintained by the group policy container 308 and registered in the changed data lists 312. Thus, steps 600 and 602 potentially execute multiple times before the accumulated changes are passed to requesting ones of the client machines 202.

Thereafter, during step 604, an event wakes up the client-side group policy management code 320. In an embodiment of the invention such event occurs when a group policy refresh cycle period expires (e.g., every 90 minutes) on one of the client machines 202 or when a new user logs onto one of the client machines 202. Next, during step 606 the group policy code 320 queries the directory of network resources/configurations 300 (e.g., the changed data lists 312) for all the group policy objects that apply to the client machine 202a or any users logged onto the client machine 202a. It is noted that in the above-described exemplary embodiment, the client machines 202 poll the directory of network resources/configurations 300 for changes to relevant configuration data. However, in alternative embodiments of the invention the directory of network resources/configurations 300 pushes or broadcasts the changed data to the client machines. In yet other embodiments, hybrids/variations of the above-described polling and pushing methods are utilized by the directory of network resources/configurations 300 and the client machines 202 to distribute/present updated printer connection lists to the printer sub-systems of the client machines 202.

After obtaining a list of changed GPOs, and changed configuration data types, applicable to the machine 202a (including logged on users), control passes to step 608 wherein the group policy code 320 invokes the printer group policy extension 324. The call to the printer group policy extension 324 includes references to the GPOs having changed printer connections (if such changes have occurred). In a particular embodiment of the invention, the printer group policy extension 324 is not passed the actual printer connection data. Instead, the extension 324 is passed a list of locations (e.g., directory service path names) in the directory of network resources/configurations 300 corresponding to the group policy objects that have changed printer Connection data. In such embodiment, the GPO's are associated with particular nodes representing machine locations, directory service user groups, etc. in the directory of network resources/configurations 300 (e.g., marketing group, US marketing group, Building 5, etc.). Printer connections are assignable to multiple group policy objects associated with different levels of directory service groups (a general and then more specific user group) in a same directory service tree branch. Pushed printers at all levels of the directory service are union-ed together to form the pushed printer of the user - i.e. if someone is part of "Windows Marketing" and "Windows Marketing" is part of "All Marketing" , the user sees the pushed printers for a first GPO specified for "Windows Marketing" and a second GPO specified for "All Marketing." In an embodiment of the invention, printer connection limiting mechanisms are provided such that an administrator can specify that a client machine/user only receive printer connections specified by a GPO assigned at the directory service level having the greater degree of specificity (i.e , at the lower level of a branch in the directory service tree).

Furthermore, in an embodiment of the invention, printer connection setup retry logic is linked to the event-driven awakening of the group policy code 320. In this embodiment the printer group policy extension 324 is called (with a null list of GPO references), even when none of the printer connections relevant to the client machine 202a have changed, to provide an opportunity for the printer group policy extension to resend printer connections to the spooler 330. As depicted at step 610, two distinct execution paths are taken by the extension 324 based upon whether a GPO is identified in the group policy code's call (e.g., at least one printer connection has changed).

If the call to the extension 324 includes at least one reference to a GPO, then control passes from step 610 to step 612. The printer group policy extension 324 locates all printer connections associated with the referenced GPOs in the group policy container 308, and updates the printer connections in the printer connections section 328 of the extension registry structure 326. As noted previously above with reference to FIG. 3, each printer connection entry in the printer connections section 328 identifies the GPO from which the printer connection was originally obtained. Thus, a same printer connection can be represented more than once in the printer connections section 328, under different GPO identifications. Identifying the printer connection source (e.g., GPO) in the printer connections section 328 facilitates identifying printer connections deleted from a source (e g., a changed GPO) of printer connections. Thus, during step 612 the extension 324, for each GPO identified in the call from the group policy code during step 608, replaces the current set of printer connections with the new connections.

Storing the printer connections in the printer connections section 328 facilitates retrying, without costly network communications, a previously failed attempt by the spooler 330 to install one or more new printer connection. The extension 324 need only read the printer connections section 328 rather than perform a costly network request of the group policy container 308. An exemplary retry method is built into the normal operation of the extension 324 and spooler 330 described herein. Such retry logic is exercised in response to the extension 324 being called during step 608, regardless of whether any printer connections have changed. Thus, if no changes to printer connections are identified in the call from the group policy code during step 608, then control passes from step 610 to step 614. Alternatively, the spooler 330 maintains its own retry logic (process/thread), and control passes to the End in the event that the printer extension 324 determines at step 610 that no changes have occurred to the printer connections.

In an embodiment of the present invention, the spooler never reads the connection information from the printer connections section 328 that is maintained by the printer group policy extension 324. Instead, during step 614 the extension calls an update method on the spooler 330 and passes the current set of printer connections (without duplicates) maintained in the printer connections section 328. By way of example, the call includes an array designating the current set of printer connections associated with the client machine 202a. The spooler server 332 queues the array of printer connections.

At a later time, the queued printer connections are removed from the queue, and during step 616 the spooler router 334 initially determines whether a new list of printer connections differs from a previously processed printer connection list. It is noted that in a particular embodiment of the invention, the spooler router 334, on each successful update to the printer connection, generates a cyclical redundancy code (CRC) on the list of printer connections. If the spooler router 334 fails to complete the printer connection update, then the spooler router 334 invalidates the printer connection CRC. The spooler router 334 then waits for the next call of from the printer group policy extension 324 to retry failed printer connection update operations. In this exemplary embodiment, during step 616 the spooler router 334 compares the current pushed printer connection CRC with the last successful CRC. If the two CRC values are equal, then the printer connections are not updated, and control passes to the End. However, if they are not equal, then control passes to step 618 for further processing of the new printer connection list.

During step 618, when the router 334 processes the printer connection list, the spooler router 334 determines what printer connections to delete by comparing the new list of printer connections to the current set of previously passed printer connections. The router 334 processes deleted connections first, and then new connections are added. Upon completion of the processing steps to the printer connection list, the old CRC is either replaced with a new one (based upon new list of printer connections) or invalidated. Configuration of the printer sub-system is completed by installing any new printer connections necessitated by a reference to a new printer type for which a driver has not previously been installed. Control then passes from step 618 to the End.

The above-described infrastructure and method for specifying printer connections in a network environment is an administrative capability that is most beneficial in relatively large (e.g., corporate-wide) networks. In an embodiment of the invention an administrative tool/utility enables an administrator to easily select printers and users and have those printer connections placed upon the users' client machines without having to physically travel to each user's machine. By way of example, an administrator graphical user interface supports specifying printer connections for, by way of example groups of users or machines in the network. The printer connection administration graphical user interface, in an embodiment of the invention, is accessed via the MICROSOFT Print Management Console. Furthermore, all functionality exposed by the administrative graphical user interface can also be achieved via scripts.

In an embodiment of the present invention, incorporating the present invention into a network gives rise to at least two classes of printer connections A "pushed" printer connection class is established by the above-described automated method. A "non-pushed" printer connection class includes all printer connections that were established using other methods of specifying printer connections, including by directly specifying the printer connections via a user interface on the particular client machine to which the printer connection is assigned.

In an embodiment of the invention, a set rules are set up with regard to replacing previously installed printer connections. An administrator's designation of a (pushed) printer connection via the above-described mechanism will generally trump a previous same (but non-pushed) printer connection established via other mechanisms. The following examples demonstrate how various acts affect the status of the printer connections on a client machine:
1. If a user of a client machine makes a printer connection and then an ) administrator pushes the same connection, then the client machine will end up with one pushed connection;
2. If an administrator pushes a connection, the client can change the printing preferences, but cannot create a new, duplicate, connection (i e., the client will end up with one pushed connection);
3. The administrator can delete all pushed connections;
4. The administrator cannot delete user-created connections (in other words, if a user connects to \\foo\bar and the administrator has not pushed a connection to \\foo\bar, then the administrator cannot pull the connection ― he must first push the connection, thereby "trumping" the user's self-connect and then the administrator is permitted to pull the connection);
5. A client can delete user-created connections but not pushed connections;
6. If the administrator has pushed a printer by its real name, then the administrator must pull it by its real name;
7. If a connection is pushed by printer (share) name, the connection must be pulled by share name;
8. As noted previously above, a printer connection can be designated on a per user and per machine basis. If an administrator pushes both a per machine and per user connection, the administrator must delete both connections to remove the printer connection from the client machines; and
9. If a user designated connection exists, and an administrator subsequently pushes either a per machine or per user connection and then pulls that connection, the user will not have a connection to that printer.

### Administrator Console (MMC + Print Connection Snap-in)

Before printer connection actions can be distributed to and incorporated into the print request operations of users/machines, they must be placed within the directory of network resources/configurations 300. In an embodiment of the invention, a management console utility, utilized by network administrators, executes upon any networked machine and enables network administrators to view and specify changes to printer connections. The management console utility, described herein below with reference to a set of exemplary graphical user interfaces, provides a conduit enabling administrators to designate changes to printer connections that are stored within the directory of network resources/configurations 300 maintained by the directory service server 212.

The management console utility, in an embodiment of the invention, is a MICROSOFT MANAGEMENT CONSOLE (MMC) software utility augmented by a printer connection action specification snap-in program module. In a particular embodiment of the invention, the printer connection snap-in program module supports designating print connection action commands that are received by the directory of network resources/configurations 300. Such commands push printer connection actions to the directory of network resources/configurations 300. Thereafter, the network resource directory 300 packages the actions in the aforementioned group policyobjects (GPOs).

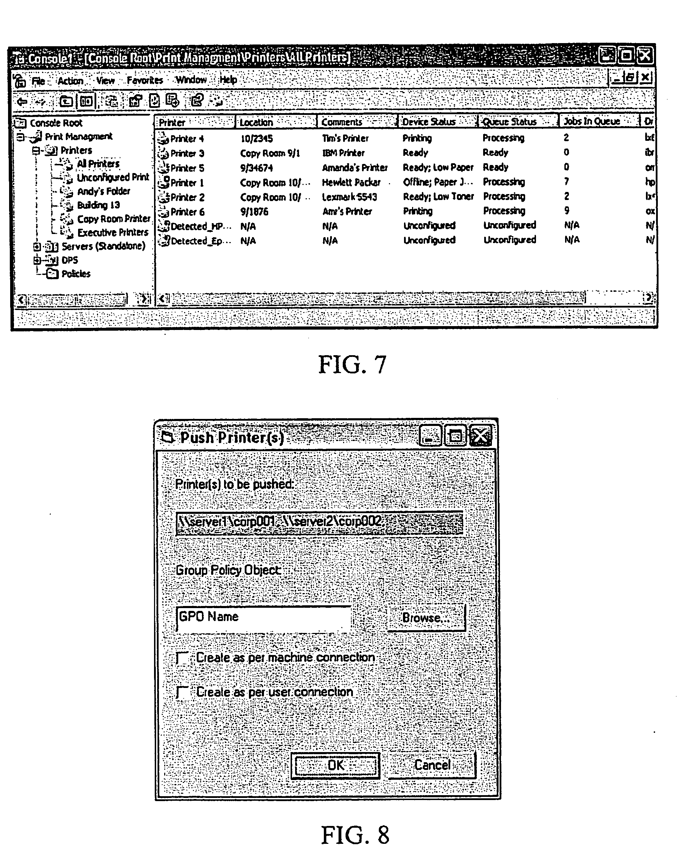

Turning to a set exemplary administrator graphical user interfaces depicted in **FIGs. 7-12,** the management console utility enables a network resource administrator to view a current set of printer connections and specify actions relating to printer connections (e.g., add, delete, etc). Turning first to **FIG. 7**, an administrator begins a session for designating (pushing) printer connections for group policy objects (GPOs) by initially launching a printer management console including an interface, as depicted in **FIG. 7**, enumerating all network printers. The administrator selects a printer for which a printer connection is to be designated for a GPO. In an embodiment of the invention, the administrator pushes a selected printer connection to a GPO by launching a context menu on the printer from any of the printers folders and then invoking a "push printer" operation.

In response a dialog, depicted by way of example in **FIG. 8**, is created. The push printers dialog, in addition to listing the UNCNames for selected printers, allows browsing/searching for GPOs in the directory of network resources. An administrator, through the dialog, selects a GPO to which the listed printer connections are to be pushed. The dialog also supports designating whether the connection is a per-machine or per-user connection or both. As depicted in **FIG. 8**, multiple printer connections can be pushed to a GPO by multi-selection of the printer connections. On the other hand, an administrator, in an embodiment of the invention, cannot select an entire folder of printers such as "building 10 printers" and push them because the set of printers within the folder may change (or be hidden) ― giving rise to complications.

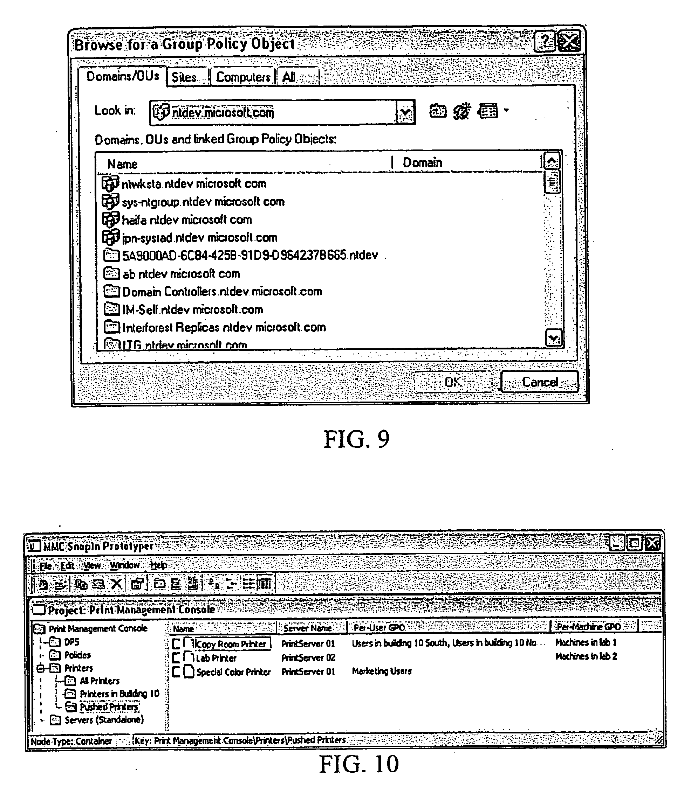

Turning to **FIG. 9**, an exemplary browse dialog is depicted that enables a user to select a GPO to which particular connections apply. Clicking "Browse" in the dialog depicted in **FIG. 8** launches a standard GPO dialog enabling an administrator to select a desired GPO. In an embodiment of the invention, the administrator will only be able to select one GPO at a time By selecting only one GPO for each individual push to a GPO, the pushing printer connection transaction succeeds or fails without the complexities of determining what pushed connection failed (the case when several GPOs are assigned multiple printer connections as a transaction) and undoing actions that occurred during the push operation. If the printer connection push operation is partially or completely unsuccessful, a dialog box will inform the administrator which printer connections could not be pushed to that GPO.

Another exemplary user interface, depicted by way of example in FIG. 10, displays the current set of pushed printer connections in the network. The exemplary display interface enumerates the pushed connection GPO- From the pushed printers (connections) filter under the Printers folder, an administrator views all printers that have been pushed, their associated servers, and the GPO's to which the printer connections have been pushed.

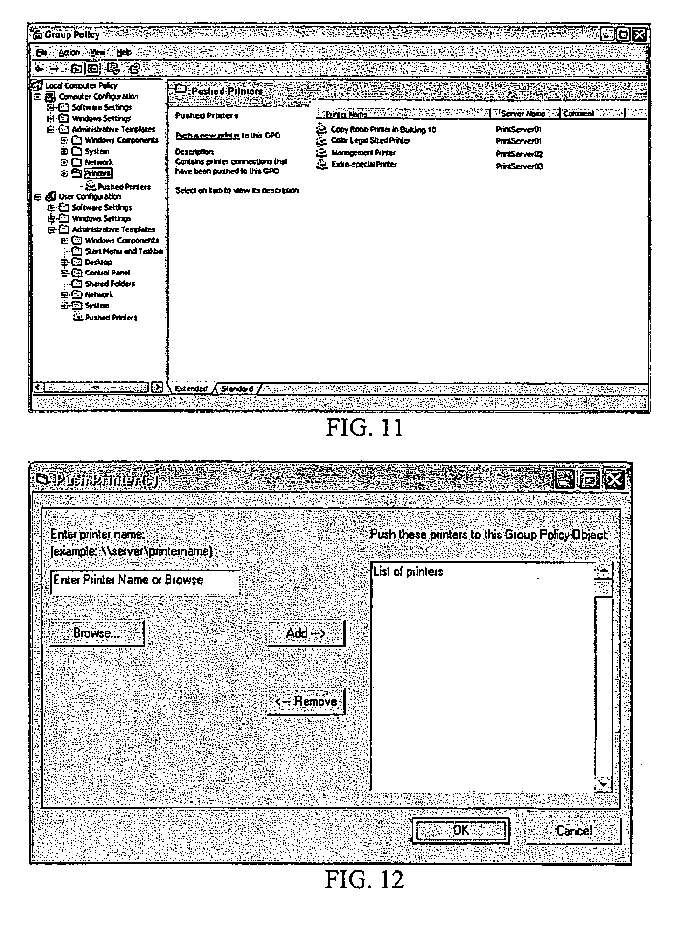

In an embodiment of the invention, as illustratively depicted in FIG. 11, a group policy editing interface is enhanced (by for example a snap-in) to display all printer connections that are pushed to a particular GPO. Such interface is accessed using the left-hand tree, underneath the *Computer Configuration->Administrative Templates->Printers->Pushed Printers node* (for per-machine connections) or underneath the *User Configuraton->Adminstrative Templates->Pushed Printers node* (for per-user connections). Upon selecting one of the printer connection types, the display interface enumerates all the pushed per user or per machine connections associated with that GPO.

When an administrator right clicks on the "Pushed Printers" node of the interface depicted in **FIG. 11**, a context menu is presented that includes an Add/Remove Printer menu item enabling the administrator to designate (push) a new printer connection to the GPO or remove a previously added printer connection. The administrator is able to right click on a printer to get the "remove" task or just select a printer or group of printers and hit delete. When the administrator selects Add/Remove Printer, the dialog depicted in **FIG. 12**, is rendered. By clicking the Remove button, the administrator is able to remove a listed printer from that GPO. When "Browse..." is selected, a Find Printers dialog is launched. When the administrator clicks "OK" , the printer names are checked for correctness. Then, text is generated stating "Adding Connection," "Error" etc.

It will be appreciated by those skilled in the art that a new and useful method and system has been described for managing printer connections in a networked print server/printer environment. In view of the many possible environments to which the principles of this invention may be applied and the flexibility of designing and carrying out software utilities and tools, it should be recognized that the embodiments described herein are meant to be illustrative and should not be taken as limiting the scope of invention. Those skilled in the art to which the present invention applies will appreciate that the illustrated embodiments can be modified in arrangement and detail without departing from the spirit of the invention. Therefore, the invention as described herein contemplates all such embodiments as may come within the scope of the following claims and equivalents thereof.

## Claims

1. A method for administering printer connections, in a network comprising one or more client machines, printers, and servers, a directory including an enumeration of network entities and configuration definitions including configurable parameters assignable to the network entities, wherein one of the configurable parameters of the configuration definitions comprises connections to specified ones of the printers in the network, said method comprising the steps of:
specifying a change to a set of printer connections within a first configuration definition assigned to a first network entity represented in the directory of network resources;
receiving, by a client machine associated with the first network entity, a notification of the change to the set of printer connections; and
incorporating, by the client machine, the change to the set of printer connections into the printer sub-system of the client machine.

2. The method of claim 1 comprising the step of:
maintaining the configuration definitions in a container of policy objects defining configurations for groups of users and machines identified in the directory of network resources.

3. The method of claim 2 further comprising:
maintaining links associating configuration definitions in the container of policy objects with selected ones of the network entities enumerated in the directory.

4. The method of claim 1 comprising the step of:
adding a new printer connection to the first configuration definition via a network administration graphical user interface including a browse feature for enumerating configuration definitions.

5. The method of claim 1 wherein the first network entity comprises a group of users.

6. The method of claim 1 wherein the first network entity comprises a client machine.

7. The method of claim 1 wherein the first network entity comprises a group of machines.

8. The method of claim 1 wherein a list of changed configuration definitions is maintained on a directory server machine that includes the directory and configuration definitions, the method further comprising:
inserting, in accordance with the specifying step, an item within the list of changed configuration definitions, corresponding to the first configuration definition and identifying a printer connection change type.

9. The method of claim 8, wherein client-side configuration management code resides upon the client machine, further comprising:
querying, by the client-side configuration management code, the directory server machine for updates of the first configuration definition.

10. The method of claim 1, wherein the directory and configuration definitions reside upon a directory server machine and client-side configuration management code resides upon the client machine, further comprising:
invoking the client-side configuration management code, pursuant to a periodic timer event, to query the directory server machine for updates of the first configuration definition.

11. The method of claim 1 further comprising:
maintaining, on the client machine, a list of printer connections and associated configuration definitions.

12. A printer connection administration framework for administering printer connections in a network comprising one or more client machines, printers, and servers, the printer connection administration framework comprising:
a directory service server including a directory comprising an enumeration of network entities and configuration definitions assignable to the network entities, the configuration definitions potentially including printer connections; and
a client machine including a printer connection extension for:
processing a printer connection update corresponding to a first configuration definition in the directory service server and assigned to a first network entity with which the client machine is associated, and
submitting an update request to a printer sub-system informing the printer sub-system on the client machine of changes to printer connections in accordance with the printer connection update.

13. The printer connection administration framework of claim 12 comprising:
a container of policy objects, on the directory service server, comprising configuration definitions defining configurations for groups of users and machines identified in the directory of network resources.

14. The printer connection administration framework of claim 13 further comprising:
links associating configuration definitions in the container of policy objects with selected ones of the network entities enumerated in the directory.

15. The printer connection administration framework of claim 12 further comprising:
a network administration graphical user interface for adding a new printer connection to the first configuration definition, wherein the graphical user interface includes a browse feature for enumerating configuration definitions.

16. The printer connection administration framework of claim 12 wherein the first network entity comprises a group of users.

17. The printer connection administration framework of claim 12 wherein the first network entity comprises a client machine.

18. The printer connection administration framework of claim 12 wherein the first network entity comprises a group of machines.

19. The printer connection administration framework of claim 12 further comprising a list of changed configuration definitions maintained on a directory server machine that includes the directory and configuration definitions, and wherein an item is inserted in the list of changed configuration definitions identifying a printer connection change type in the first configuration definition in accordance with specifying a printer connection change in the first configuration definition.

20. The printer connection administration framework of claim 19, wherein client-side configuration management code resides upon the client machine, and wherein the configuration management code queries the directory server machine for updates of the first configuration definition.

21. The printer connection administration framework of claim 12, wherein the directory and configuration definitions reside upon a directory server machine and client-side configuration management code resides upon the client machine, and further comprising a periodic timer, wherein the client-side configuration management code is invoked, pursuant to an event initiated by the periodic timer, to query the directory server machine for updates of the first configuration definition.

22. The printer connection administration framework of claim 21, wherein a period of the periodic timer is configurable.

23. The printer connection administration framework of claim 12 further comprising:
a list, on the client machine, of printer connections and associated configuration definitions.

24. A method for updating printer connections by a client machine, in a network comprising printers, a directory including an enumeration of network-entities and configuration definitions including configurable parameters assignable to the network entities, wherein one of the configurable parameters of the configuration definitions comprises connections to specified ones of the printers in the network, said method comprising the steps, performed by the client machine, of:
requesting an update of information maintained in a configuration definition assigned to a first network entity in the directory with which the client machine is associated;
receiving a notification of a change to a set of printer connections in the configuration definition assigned to the first network entity; and
incorporating the change to the set of printer connections into the printer sub-system of the client machine.

25. The method of claim 24 wherein the client machine includes a logon script, and wherein the requesting step is invoked on the client machine in accordance with executing the logon script.

26. The method of claim 24 wherein the first network entity comprises a group of users.

27. The method of claim 24 wherein the first network entity comprises a client machine.

28. The method of claim 24 wherein the first network entity comprises a group of machines.

29. The method of claim 24, wherein client-side configuration management code resides upon the client machine, further comprising:
querying, by the client-side configuration management code, a directory server machine for updates of the first configuration definition.

30. The method of claim 24, wherein the directory and configuration definitions reside upon a directory server machine and client-side configuration management code resides upon the client machine, further comprising:
invoking the client-side configuration management code, pursuant to a periodic timer event, to query the directory server machine for updates of the first configuration definition.

31. The method of claim 24 further comprising:
maintaining, on the client machine, a list of printer connections and associated configuration definitions.

32. A printer connection administration framework, incorporated into a networked client machine, for maintaining printer connections, in a network comprising printers, a directory comprising an enumeration of network entities and configuration definitions assignable to the network entities, the configuration definitions potentially including printer connections, the printer connection administration framework in a networked client machine comprising:
a printer connection extension for:
processing a printer connection update call corresponding to at least a first configuration definition assigned to a first network entity with which the client machine is associated, and
submitting an update request to a printer sub-system informing the printer sub-system on the client machine of changes to printer connections in accordance with the printer connection update.

33. The printer connection administration framework of claim 32 further comprising configuration definition management code for observing changes to configuration definitions for network entities with which the networked client machine is associated.

34. The printer connection administration framework of claim 33 wherein the configuration definition management code is invoked periodically.

35. The printer connection administration framework of claim 34 wherein the configuration definition management code is invoked in response to a user logon event.

36. The printer connection administration framework of claim 32 further comprising a periodic timed event that results in invocation of the printer connection extension.

37. The printer connection administration framework of claim 36 wherein a period for the periodic timed event is configurable.

38. The printer connection administration framework of claim 32 wherein the first network entity comprises a group of users.

39. The printer connection administration framework of claim 32 wherein the first network entity comprises a client machine.

40. The printer connection administration framework of claim 32 wherein the first network entity comprises a group of machines.

41. The printer connection administration framework of claim 32, wherein a directory server machine maintains the directory and configuration definitions, further comprising client-side configuration management code for querying the directory server machine for updates of the first configuration definition.

42. The printer connection administration framework of claim 32, wherein the directory and configuration definitions reside upon a directory server machine, further comprising:
client-side configuration management code; and
a periodic timer,
wherein the client-side configuration management code is invoked, pursuant to an event initiated by the periodic timer, to query the directory server machine for updates of the first configuration definition.

43. The printer connection administration framework of claim 32 further comprising a registry for maintaining a list of printer connections and associated configuration definitions.

44. A computer-readable medium including computer-executable instructions for facilitating updating printer connections by a client machine, in a network comprising printers, a directory including an enumeration of network entities and configuration definitions including configurable parameters assignable to the network entities, wherein one of the configurable parameters of the configuration definitions comprises connections to specified ones of the printers in the network, the computer-executable instructions facilitating performing, by the client machine, a method comprising:
requesting an update of information maintained in a configuration definition assigned to a first network entity in the directory with which the client machine is associated;
receiving a notification of a change to a set of printer connections in the configuration definition assigned to the first network entity; and
incorporating the change to the set of printer connections into the printer sub-system of the client machine.

45. The computer-readable medium of claim 44 wherein the client machine includes a logon script, and wherein the requesting step is invoked on the client machine in accordance with executing the logon script.

46. The computer-readable medium of claim 44 wherein the first network entity comprises a group of users.

47. The computer-readable medium of claim 44 wherein the first network , entity comprises a client machine.

48. The computer-readable medium of claim 44 wherein the first network entity comprises a group of machines.

49. The computer-readable medium of claim 44 further comprising client-side configuration management code facilitating performing:
querying, by the client-side configuration management code, a directory server machine for updates of the first configuration definition.

50. The computer-readable medium of claim 44, wherein the directory and configuration definitions reside upon a directory server machine, further comprising client-side configuration management code facilitating performing:
invoking the client-side configuration management code, pursuant to a periodic timer event, to query the directory server machine for updates of the first configuration definition.

51. The computer-readable medium of claim 44 further comprising computer-executable instructions for:
maintaining, on the client machine, a list of printer connections and associated configuration definitions.

52. A computer-readable medium including computer-executable instructions for facilitating administering printer connections, in a network comprising one or more client machines, printers, and servers, a directory including an enumeration of network entities and configuration definitions including configurable parameters assignable to the network entities, wherein one of the configurable parameters of the configuration definitions comprises connections to specified ones of the printers in the network, the computer-executable instructions facilitating performing a method comprising:
specifying a change to a set of printer connections within a first configuration definition assigned to a first network entity represented in the directory of network resources;
receiving, by a client machine associated with the first network entity, a notification of the change to the set of printer connections; and
incorporating, by the client machine, the change to the set of printer connections into the printer sub-system of the client machine.

53. A printer connection administration framework, incorporated into a networked client machine, for maintaining printer connections, in a network comprising printers, a directory comprising an enumeration of network entities and configuration definitions assignable to the network entities, the configuration definitions potentially including printer connections, the printer connection administration framework in a networked client machine comprising:
means for processing a printer connection update call corresponding to at least a first configuration definition assigned to a first network entity with which the client machine is associated, and
means for submitting an update request to a printer sub-system informing the printer sub-system on the client machine of changes to printer connections in accordance with the printer connection update.

54. The printer connection administration framework of claim 53 further comprising means for observing changes to configuration definitions for network entities with which the networked client machine is associated.

55. The printer connection administration framework of claim 54 further comprising means for periodically invoking the means for observing changes to configuration definitions.

56. The printer connection administration framework of claim 53 further comprising means for generating a periodic timed event that results in invocation of the printer connection extension.

57. The printer connection administration framework of claim 53, wherein a directory server machine maintains the directory and configuration definitions, further comprising means for querying the directory server machine for updates of the first configuration definition.

58. The printer connection administration framework of claim 53, wherein the directory and configuration definitions reside upon a directory server machine, further comprising:
periodic timer means for generating an event to invoke querying the directory server machine for updates of the first configuration definition.

59. The printer connection administration framework of claim 53 further comprising means for maintaining a list of printer connections and associated configuration definitions

60. A printer connection administration facility, incorporated into a network client machine, for updating printer connections by a client machine, in a network comprising printers, a directory including an enumeration of network entities and configuration definitions including configurable parameters assignable to the network entities, wherein one of the configurable parameters of the configuration definitions comprises connections to specified ones of the printers in the network, said client machine comprising:
means for requesting an update of information maintained in a configuration definition assigned to a first network entity in the directory with which the client machine is associated;
means for receiving a notification of a change to a set of printer connections in the configuration definition assigned to the first network entity; and
means for incorporating the change to the set of printer connections into the printer sub-system of the client machine.

61. The printer connection administration facility of claim 60 wherein the client machine includes means for invoking the means for requesting in response to an individual user logon event.

62. The printer connection administration facility of claim 60, wherein the directory and configuration definitions reside upon a directory server machine and client-side configuration management code resides upon the client machine, further comprising:
means for invoking the client-side configuration management code, pursuant to a periodic timer event, to query the directory server machine for updates of the first configuration definition.

63. The printer connection administration facility of claim 60 further comprising means for maintaining, on the client machine, a list of printer connections and associated configuration definitions.

64. A printer connection administration framework for administering printer connections, in a network comprising one or more client machines, printers, and servers, a directory including an enumeration of network entities and configuration definitions including configurable parameters assignable to the network entities, wherein one of the configurable parameters of the configuration definitions comprises connections to specified ones of the printers in the network, said framework comprising:
means for specifying a change to a set of printer connections within a first configuration definition assigned to a first network entity represented in the directory of network resources;
means for receiving, by a client machine associated with the first network entity, a notification of the change to the set of printer connections; and
means for incorporating, by the client machine, the change to the set of printer connections into the printer sub-system of the client machine.
